# EUROPEAN PATENT APPLICATION

(11) **EP 2 998 938 A1**
(43) Date of publication of application: **23.03.2016**
(21) Application number: 15166431.5
(22) Date of filing: 05.05.2015
(51) Int. Cl.: G06T 15/04, G06T 1/60

(54) **METHOD AND APPARATUS FOR PROCESSING TEXTURE**

(30) Priority: 16.09.2014 KR 20140122941
(71) Applicant: Samsung Electronics Co., Ltd, Gyeonggi-do 443-742 (KR)
(72) Inventor: Park, Jeongsoo, 443-803 Gyeonggi-do (KR); Kwon, Kwontaek, 443-803 Gyeonggi-do (KR); Park, Jeongae, 443-803 Gyeonggi-do (KR)
(74) Representative: Portch, Daniel

(57) **Abstract**

A method and apparatus for processing a texture are provided. The method of processing the texture includes acquiring a texture address corresponding to a pixel address and frequency information of the texture, determining a number of texels to be used for texture filtering according to the frequency information of the texture, reading texel values corresponding to the determined number of texels based on the texture address, and performing the texture filtering by using the read texel values.

## Description

### FIELD OF THE INVENTION

The following description relates to methods and apparatuses for processing a texture mapped to pixels forming a frame.

### BACKGROUND OF THE INVENTION

Examples of three-dimensional (3D) graphics application program interface (API) standards are OpenGL, OpenGL ES, Direct 3, and the like. Each of the API standards includes a method of rendering each frame in 3D graphics and displaying an image. When each frame in 3D graphics is rendered, a lot of computations are performed, thereby consuming much power. Therefore, it is necessary to reduce the amount of computations for rendering each frame in 3D graphics and the number of accesses of a graphics processing unit to an external memory.

### SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Additional aspects will be set forth in part in the description which follows and, in part, will be apparent from the description, or may be learned by practice of the presented examples.

According to an aspect of an exemplary embodiment, a method of processing a texture includes acquiring a texture address corresponding to a pixel address and frequency information of the texture, determining a number of texels to be used for texture filtering according to the frequency information of the texture, reading texel values corresponding to the determined number of texels based on the texture address, and performing the texture filtering by using the read texel values. Embodiments may provide for a reduction in the time taken to process a texture. Embodiments may therefore reduce a time taken to process graphics.

The determining of the number of texels may include determining a minimum number of texels to be used for the texture filtering in response to the frequency information of the texture indicating a lower frequency than a reference value related to a texel value change rate.

The reading of the texel values may include receiving a request for texel values of a texture stored in a texture cache on the basis of the texture address, determining a number of cache hits for the requested texel values in the texture cache, and transmitting texel values corresponding to the minimum number of texels according to a result of comparing the number of cache hits for the requested texel values with the minimum number of texels.

The receiving of the request for texel values of the texture stored in the texture cache may include receiving a request for texel values corresponding to the minimum number of texels.

The transmitting of the texel values may include requesting an external memory for texel values corresponding to a number of cache misses when the number of cache hits is less than the minimum number of texels to be used for the texture filtering, and compensating for at least one texel value received from the external memory to a cache-hit texel values and simultaneously transmitting the texel values corresponding to the minimum number of texels.

The transmitting of the texel values may include transmitting the texel values corresponding to the minimum number of texels in response to the number of cache hits being greater than or equal to the minimum number of texels to be used for the texture filtering.

The reading of the texel values may include requesting an external memory for at least one texel value corresponding to a number of cache misses after transmitting the texel values corresponding to the minimum number of texels; and storing the at least one texel value received from the external memory, in the texture cache.

The determining of the number of texels may include determining a maximum number of texels to be used for the texture filtering in response to the frequency information of the texture indicating a higher frequency than a reference value related to the texel value change rate.

The frequency information of the texture may be based on information extracted from a header file of a compressed texture.

According to an aspect of another exemplary embodiment, a non-transitory computer-readable recording medium has recorded thereon a computer-readable program for performing the method of processing a texture.

According to an aspect of another exemplary embodiment, an apparatus for processing a texture includes a control unit configured to acquire a texture address corresponding to a pixel address and frequency information of the texture and to determine the number of texels to be used for texture filtering according to the frequency information of the texture, a texture cache configured to read texel values corresponding to the determined number of texels based on the texture address, and a texture filter configured to perform the texture filtering by using the read texel values.

The control unit may further determine a minimum number of texels to be used for the texture filtering in response to the frequency information of the texture indicating a lower frequency than a reference value related to a texel value change rate.

The texture cache may further receive a request for texel values of a texture stored in the texture cache on the basis of the texture address, to determine a number of cache hits for the requested texel values, and to transmit texel values corresponding to the minimum number of texels according to a result of comparing the number of cache hits for the requested texel values with the minimum number of texels.

The texture cache may receive the request for texel values corresponding to the minimum number of texels.

The texture cache may request an external memory for texel values corresponding to a number of cache misses when the number of cache hits is less than the minimum number of texels to be used for the texture filtering, to compensate for at least one texel value received from the external memory to the cache-hit texel values and to simultaneously transmit texel values corresponding to the minimum number of texels.

The texture cache may transmit texel values corresponding to the minimum number of texels in response to the number of cache hits being greater than or equal to the minimum number of texels to be used for the texture filtering.

The texture cache may request an external memory for at least one texel value corresponding to a number of cache misses after transmitting the texel values corresponding to the minimum number of texels and to store the at least one texel value received from the external memory.

The control unit may determine a maximum number of texels to be used for the texture filtering in response to the frequency information of the texture indicating a higher frequency than the reference value related to the texel value change rate.

The apparatus may further include a decompressor configured to decompress a compressed texture received from an external memory, wherein the control unit acquires the frequency information of the texture, which is determined based on information extracted from a header file of the compressed texture, from the decompressor.

The frequency information of the texture may be determined based on compression ratio information of the compressed texture, which is extracted from the header file.

Other features and aspects will be apparent from the following detailed description, the drawings, and the claims.

### BRIEF DESCRIPTION OF THE EMBODIMENTS

FIG. 1 is a block diagram illustrating an example of a graphics processing unit (GPU);
FIG. 2 illustrates an example of a process of processing three-dimensional (3D) graphics in the GPU of FIG. 1;
FIG. 3 is a block diagram illustrating an example of a texture processing unit;
FIG. 4 illustrates an example of an operation of the texture processing unit of FIG. 3;
FIG. 5 illustrates another example of an operation of the texture processing unit of FIG. 3;
FIG. 6 illustrates another example of an operation of the texture processing unit of FIG. 3;
FIG. 7 is a flowchart of an example of a texture processing method;
FIG. 8 is a flowchart of an example of an operation of determining the number of texels to be used for texture filtering in the texture processing method of FIG. 7;
FIG. 9 is a flowchart of an example of an operation of reading texel values corresponding to a number of texels determined for a low-frequency texture in the texture processing method of FIG. 7;
FIG. 10 is a flowchart of an example of an operation of transmitting texel values corresponding to a minimum number of texels according to a result of comparing the number of cache hits with the minimum number of texels in the operation of FIG. 9;
FIG. 11 is a flowchart of an example of an operation of reading texel values corresponding to a number of texels determined for a high-frequency texture in the texture processing method of FIG. 7; and
FIG. 12 is a flowchart of an example of an operation of transmitting texel values corresponding to a maximum number of texels according to a result of comparing a number of cache hits with the maximum number of texels in the operation of FIG. 11.

### DETAILED DESCRIPTION OF THE DRAWINGS

The following detailed description is provided to assist the reader in gaining a comprehensive understanding of the methods, apparatuses, and/or systems described herein. However, various changes, modifications, and equivalents of the methods, apparatuses, and/or methods described herein will be apparent to one of ordinary skill in the art. For example, the sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

Throughout the drawings and the detailed description, the same reference numerals refer to the same elements. The drawings may not be to scale, and the relative size, proportions, and depiction of elements in the drawings may be exaggerated for clarity, illustration, and convenience.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

It will be understood that the terms "comprises", "comprising", and/or the like, when used in this specification, specify the presence of stated components and/or steps but do not preclude the exclusion of some of the stated components and/or steps or the presence or addition of one or more other components and/or steps.

Although terms, such as 'first' and 'second', used in this specification can be used to describe various elements, the elements cannot be limited by the terms. The terms can be used to classify a certain element from another element.

As used herein, the term "and/or" includes any and all combinations of one or more of the associated listed items.

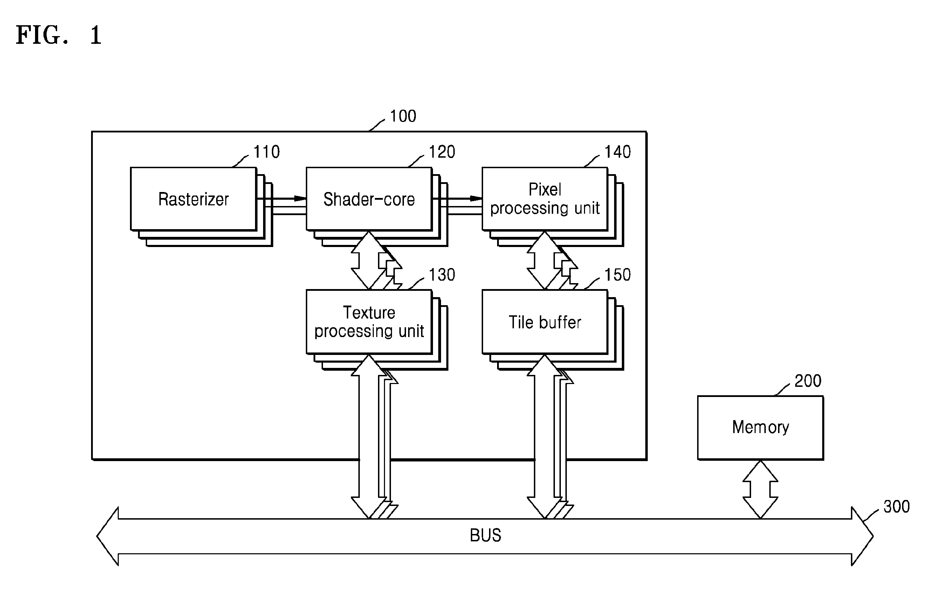

FIG. 1 is a block diagram of an example of a graphics processing unit (GPU). It will be understood by those of ordinary skill in the art that general-use components other than the components shown in FIG. 1 may be further included

Referring to FIG. 1, the GPU 100 includes a rasterizer 110, a shader-core 120, a texture processing unit 130, a pixel processing unit 140, and a tile buffer 150. However, it is noted that the GPU 100 may include more or less of the items listed above. Similarly, although FIG. 1 illustrates the GPU 100 including the rasterizer 110, the shader-core 120, the texture processing unit 130, the pixel processing unit 140 and the tile buffer 150 included in the GPU 100, the elements may be embodied as independent hardware. Further, the GPU 100 transmits or receives data to or from an external memory 200 via a bus 300.

The GPU 100 shown in FIG. 1 is an apparatus for processing three-dimensional (3D) graphics and may use a tile-based rendering (TBR) method as described with reference to FIG. 1. In other words, the GPU 100 processes a plurality of tiles divided at a constant size by using the rasterizer 110, the shader-core 120, and the pixel processing unit 140 to generate 3D graphics corresponding to a frame and stores the processing result in the tile buffer 150. The GPU 100 parallel-processes all of the tiles by using a plurality of channels, each channel including the rasterizer 110, the shader-core 120, and the pixel processing unit 140. When a plurality of tiles corresponding to one frame are processed, the GPU 100 transmits the processing result stored in the tile buffer 150 to a frame buffer (not shown) in the external memory 200.

The shader-core 120 includes a pixel shader. The shader-core 120 may further include a vertex shader. Alternatively, the shader-core 120 may include an integrated shader in which the vertex shader and the pixel shader are integrated. When the shader-core 120 performs a function of the vertex shader, the shader-core 120 generates a primitive indicating an object and transmitting the primitive to the rasterizer 110. In addition, the shader-core 120 receives a rasterized primitive from the rasterizer 110 and performs pixel shading on the rasterized primitive.

The rasterizer 110 rasterizes the primitive generated by the vertex shader after undergoing a geometric transform process.

The shader-core 120 performs pixel shading on the rasterized primitive to determine colors of all pixels forming a tile including fragments of the rasterized primitive. The shader-core 120 uses pixel values generated using a texture to generate stereoscopic and realistic 3D graphics in the pixel shading process.

When the shader-core 120 requests the texture processing unit 130 to transmit a pixel value corresponding to a desired pixel, the texture processing unit 130 transmits a pixel value generated by processing a texture prepared in advance. The texture may be stored in a predetermined space of the texture processing unit 130 or in the external memory 200. When the texture to be used to generate the pixel value requested from the shader-core 120 is not in the predetermined space of the texture processing unit 130, the texture processing unit 130 reads the texture from the external memory 200 and use the texture read from the external memory 200. The pixel processing unit 140 determines all pixel values corresponding to one tile such that a pixel value to be used for pixels corresponding to a same location in the one tile is determined through processes such as a depth test and the like.

The tile buffer 150 stores all pixel values corresponding to one tile, which are transmitted from the pixel processing unit 140. If a graphics processing process on all tiles forming one frame is completed, the processing result stored in the tile buffer 150 is transmitted to the frame buffer in the external memory 200.

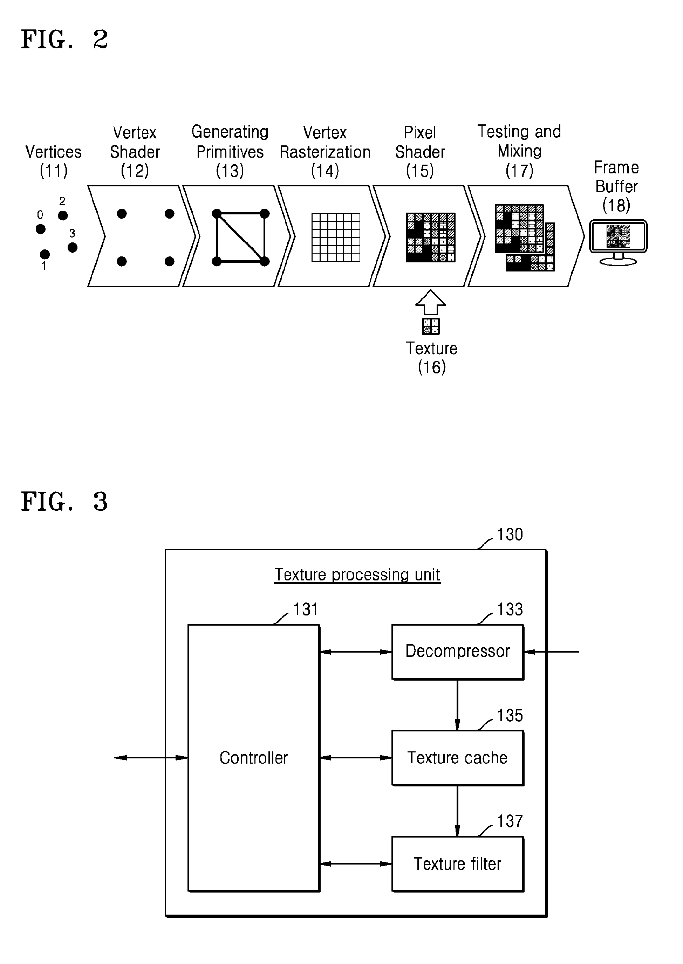

A process of processing 3D graphics will now be described in more detail with reference to FIG. 2.

FIG. 2 illustrates an example of a process of processing 3D graphics in the GPU.

Referring to FIG. 2, the process of processing 3D graphics is performed by operations 11 to 17. The process of processing 3D graphics may be largely divided into three operations of geometric transform, rasterization, and pixel shading and will now be described by dividing the process of processing 3D graphics into further detailed operations.

In operation 11, vertices are generated to indicate objects included in the 3D graphics.

In operation 12, the generated vertices are shaded. The vertex shader may shade the vertices by assigning locations of the vertices generated in operation 11.

In operation 13, primitives are generated. A primitive indicates a dot, a line, a polygon, or the like formed using at least one vertex. For example, a primitive may indicate a triangle formed connecting vertices.

In operation 14, vertices are rasterized. Rasterizing a primitive indicates dividing the primitive into fragments. A fragment is a basic unit for graphics processing on a primitive. Since a primitive includes only information on vertices, fragments between vertices are generated in the rasterization to assist graphics processing on 3D graphics.

In operation 15, pixels are shaded. Fragments forming a primitive, which are generated in the rasterization, may be pixels forming a tile. The terms "fragment" and "pixel" may be alternatively used according to circumstances. For example, a pixel shader may be replaced by a fragment shader. In general, a basic unit in graphics processing for forming a primitive may be referred to as a fragment, and thereafter, the basic unit in graphics processing for pixel shading and thereafter may be referred to as a pixel. In the pixel shading, a color of a pixel may be determined.

In operation 16, texturing is performed to determine colors of pixels. The texturing indicates determining colors of pixels by using a previously prepared image, i.e., a texture. If a color of each pixel is calculated and determined to express a variety of colors and patterns in the real world, the amount of data and a graphics processing time required for graphics processing are highly increased, and thus, colors of pixels are determined using a previously prepared texture. For example, colors of pixels may be determined by storing surface colors of objects as separate 2D images called textures and magnifying or contracting a stored texture according to a location and size of an object on a screen or mixing texel values using textures having various resolutions. In operation 17, texting and mixing are performed. Pixel values corresponding to one tile are determined by determining a pixel value to be finally displayed through a process such as a depth test and the like for pixels corresponding to a same location in the tile. 3D graphics corresponding to one frame are generated by mixing a plurality of tiles generated through the above-described operations.

In operation 18, the frame generated through operations 11 to 17 is stored in the frame buffer and displayed on a display device.

It has been described above that a pixel value generated using a previously prepared texture is used for quicker 3D graphics processing during the pixel shading. In this case, a plurality of textures having different resolutions are previously prepared so as to adaptively deal with a size of an object, and a pixel value is generated by combining the plurality of textures. Herein, a previously prepared texture having a different resolution than the other ones of the plurality of textures is referred to as a mipmap. For example, pixel values of an object having an intermediate resolution of two previously prepared mipmaps may be generated by extracting texel values at corresponding locations in the object from the two mipmaps and filtering the extracted texel values.

However, since all textures corresponding to various objects and mipmaps corresponding to each texture cannot be stored in the predetermined space of the texture processing unit 130, if a texture, which is not stored in the predetermined space of the texture processing unit 130, is necessary, access to the external memory 200 of the GPU 100 is necessary. Furthermore, if the number of texels used for texture filtering during texture processing using a texture/mipmaps increases, an access frequency to the external memory 200 also increases, and thus, quick graphics processing may be difficult.

A texture processing method and apparatus capable of performing quick graphics processing by changing the number of texels to be used for texture filtering according to types of textures in texture processing using a texture/mipmaps to reduce an access frequency to the external memory 200 of the GPU 100 will now be described.

FIG. 3 is a block diagram illustrating an example of a texture processing unit included in the GPU.

Referring to FIG. 3, the texture processing unit 130 includes a control unit 131, a decompressor 133, a texture cache 135, and a texture filter 137.

When the texture processing unit 130 receives a compressed texture from the external memory 200 of the GPU 100, the decompressor 133 decompresses the compressed texture. The decompressed texture is stored in the texture cache 135.

The texture cache 135 stores a texture used in graphics processing and also stores mipmaps having various solutions for one texture. The texture cache 135 extracts texel values required to process a pixel value requested by the shader-core 120 and transmits the extracted texel values to the texture filter 137.

The texture filter 137 generates one pixel value by filtering the texel values transmitted from the texture cache 135. Filtering texel values refers to obtaining a color value corresponding to a pixel by mixing the texel values. For example, a color value corresponding to a pixel is obtained by averaging texel values included in a partial region of a texture space including a texture address transformed from a pixel address. The pixel value generated by the texture filter 137 is a filtered texel value which has undergone a predetermined computation and is transmitted to the shader-core 120 as a response to a pixel value request of the shader-core 120.

The control unit or controller 131 is in charge of a general control of the texture processing unit 130. The control unit 131 controls the texture processing unit 130 by performing computations required to control the texture processing unit 130 or by controlling the decompressor 133, the texture cache 135, and the texture filter 137.

The control unit 131 receives a request from the shader-core 120 for a pixel value corresponding to a pixel to be processed by the shader-core 120 through a texture address corresponding to a pixel address of the pixel to be processed by the shader-core 120. To transmit a generated pixel value in response to the request, the control unit 131 performs texture processing using a texture/mipmaps by controlling the texture processing unit 130.

The control unit 131 acquires frequency information of a texture corresponding to the pixel to be processed by the shader-core 120, in order to perform texture processing using a texture/mipmaps. This is to determine a level of texture processing for generating the pixel value requested by the shader-core 120, according to the frequency information of the texture. In one example, the frequency information of the texture indicates a texel value change rate of texel forming the texture. A low spatial frequency of the texture indicates a low texel value change rate, which indicates that adjacent texels forming the texture have same or very similar texel values. In other words, a low spatial frequency of the texture indicates that a spatial correlation of the texture is high or the texture is smooth.

The texture processing unit 130 extracts and uses a plurality of texel values from a texture/mipmaps to generate the pixel value requested by the shader-core 120. Additionally, a low-frequency texture indicates a low texel value change rate, and thus, a very approximate pixel value to the requested pixel value may be generated even when all texel values supposed to be used in principle for texture filtering to generate the requested pixel value are not used. On the other hand, a high-frequency texture indicates a high texel value change rate, and thus, if all the texel values supposed to be used in principle for texture filtering to generate the requested pixel value are not used, a pixel value that is quite different from the requested pixel value may be generated. Therefore, for a high-frequency texture, a pixel value corresponding to the requested pixel value may be generated by performing texture filtering after collecting all the texel values supposed to be used in principle for texture filtering to generate the requested pixel value. In this case, the total number of texel values supposed to be used in principle for texture filtering is determined by a texture filtering method.

The control unit 131 acquires the frequency information of the texture from the decompressor 133, which has decompressed the compressed texture received from the external memory 200. The decompressor 133 determines the frequency information of the texture based on information extracted from a header file of the compressed texture and transmits the determined frequency information of the texture to the control unit 131.

The frequency information of the texture is determined based on compression ratio information of the texture. For example, when a compression ratio of the texture is high, a spatial frequency of the texture is low, and when the compression ratio of the texture is low, the spatial frequency of the texture is high. The frequency information of the texture is determined by comparing a predetermined reference for identifying a low frequency or a high frequency with the compression ratio of the texture. The predetermined reference for identifying whether the frequency information of the texture is a low frequency or a high frequency is at least one in number, and when the number of predetermined references is plural, an approximation level of the pixel value is determined by segmenting a format of the frequency information of the texture more.

The control unit 131 determines a texture processing level by acquiring the frequency information of the texture. The control unit 131 determines whether the pixel value requested by the shader-core 120 is calculated approximately or accurately. In detail, the control unit 131 determines the number of texels to be used for texture filtering. For a low-frequency texture, the control unit 131 minimizes the number of texels to be used for texture filtering to lower the number of cache misses or an access frequency to the external memory 200 of the GPU 100, thereby reducing a graphics processing time.

In general, the number of texels to be used to obtain a pixel value is determined according to a texture filtering method. However, in the present example, the number of texels to be used for texture filtering may be additionally determined according to frequency information of a texture. For example, in a tri-linear filtering method, the texture processing unit 130 performs texture filtering by using eight texel values to obtain one pixel value. However, for a low-frequency texture, the texture processing unit 130 performs the texture filtering by using a smaller number of texel values than eight texel values. In other words, when a texture has a low frequency, a texel value change rate is low, and thus, even when the texture processing unit 130 performs texture filtering by using a smaller number of texel values than the basic number of texel values to be used to obtain a pixel value requested by the shader-core 120, the texture processing unit 130 generates a very approximate pixel value to the requested pixel value and transmits the generated pixel value to the shader-core 120. The control unit 131 maximizes the reduction of a graphics processing time by determining the minimum number of texels to be used for texture filtering for a low-frequency texture and by using only pixel values corresponding to the determined minimum number of texels. The minimum number of texels to be used for texture filtering is determined differently according to a texture filtering method to be performed or is determined as a predetermined value.

Meanwhile, when a texture has a high frequency, a texel value change rate is high, and thus, the texture processing unit 130 performs texture filtering by using as many texels as determined according to a texture filtering method to obtain a pixel value requested by the shader-core 120. The texture processing unit 130 generates a pixel value corresponding to the requested pixel value by performing the texture filtering and transits the generated pixel value to the shader-core 120. The control unit 131 maintains the accuracy of a pixel value for a high-frequency texture by determining the maximum number of texels to be used for texture filtering and using texel values corresponding to the determined maximum number of texels. That is, the maximum number of texels to be used for texture filtering when a texture has a high frequency may be identical to the number of texels determined according to a texture filtering method.

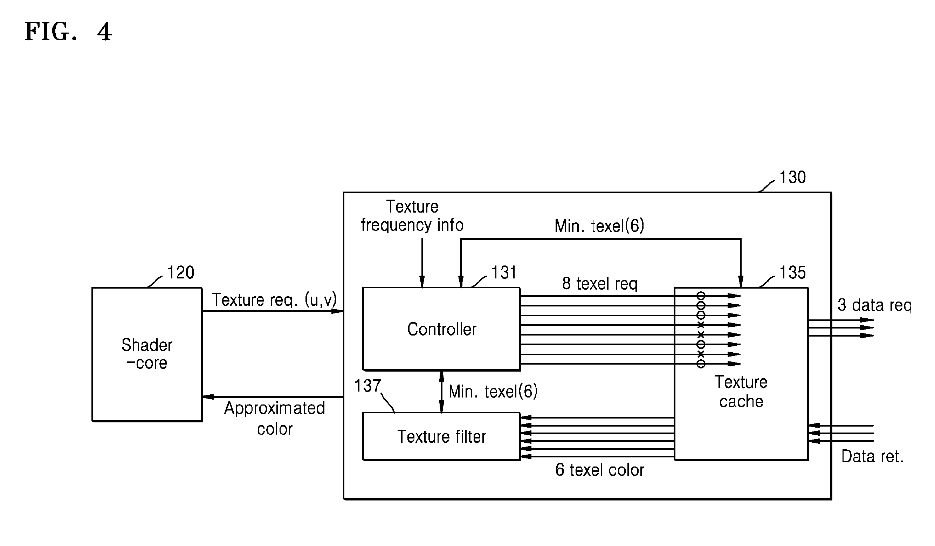

When a texture mapped to pixels forming a frame is processed by the texture processing unit 130, particularly, when the texture to be used for texture filtering is a low-frequency texture, operations of the texture processing unit 130 will now be described in detail with reference to FIGS. 4 to 6.

FIG. 4 illustrates an example of an operation of the texture processing unit 130. For convenience of description, it is premised that a texture filtering method performed by the texture filter 137 is a tri-linear filtering method, but the present embodiment is not limited thereto.

The texture processing unit 130 may receive from the shader-core 120 a request for texture processing on a pixel to be processed by the shader-core 120 through a texel address corresponding to a pixel address of the pixel to be processed by the shader-core 120.

The control unit 131 of the texture processing unit 130 may acquire frequency information of a texture corresponding to the pixel to be processed by the shader-core 120 in order to obtain a pixel value requested by the shader-core 120. When the acquired frequency information indicates a lower frequency than a predetermined reference value related to a texel value change rate, the control unit 131 may determine the minimum number of texels to be used for texture filtering. As shown in FIG. 4, when the determined minimum number of texels is 6, the control unit 131 may inform the texture cache 135 that the determined minimum number of texels is 6. In addition, the control unit 131 also transmits information on the determined minimum number of texels to the texture filter 137.

When texture filtering is performed by the texture filter 137 according to the tri-linear filtering method, eight texel values are used to obtain one pixel value, and thus, the control unit 131 of the texture processing unit 130 requests the texture cache 135 for eight texel values. For example, the control unit 131 may request the texture cache 135 for texel values included in a partial region of at least one texture/mipmap space, which has been calculated using a texture address received from the shader-core 120.

The texture cache 135 reads texel values corresponding to the number of texels which have been determined by the control unit 131. The texture cache 135 determines a cache hit and/or a cache miss by checking whether each of the texel values requested by the control unit 131 is stored in the texture cache 135 and transmits texel values corresponding to the minimum number of texels, which have been received from the control unit 131, according to a result of comparing the number of cache hits for the requested texel values with the minimum number of texels. If the number of cache hits is less than the minimum number of texels to be used for texture filtering, the texture cache 135 requests the external memory 200 for texel values corresponding to the number of cache misses, compensates for at least one texel value received from the external memory 200 to the cache-hit texel values, and simultaneously transmits texel values corresponding to the minimum number of texels to the texture filter 137.

As shown in FIG. 4, when only five texel values are cache-hit from among the eight texel values requested by the control unit 131, the number of cache hits is less than six, which is the minimum number of texels which has been determined by the control unit 131, and thus, the texture cache 135 requests the external memory 200 for three texel values corresponding to the number of cache misses. The texture cache 135 receives three texel values corresponding to the number of cache misses from the external memory 200, compensates for one of the received three texel values to the cache-hit texel values, and simultaneously transmits six texel values corresponding to the minimum number of texels to the texture filter 137. The texel values received from the external memory 200 are stored in the texture cache 135 and used in the future. The texture filter 137 generates a pixel value corresponding to the pixel value requested by the shader-core 120 by performing texture filtering using the six texel values received from the texture cache 135 and transmits the generated pixel value to the shader-core 120. Herein, the pixel value transmitted to the shader-core 120 corresponds to an approximated color value but has a very minute error, and thus, the quality of 3D graphics is not significantly influenced.

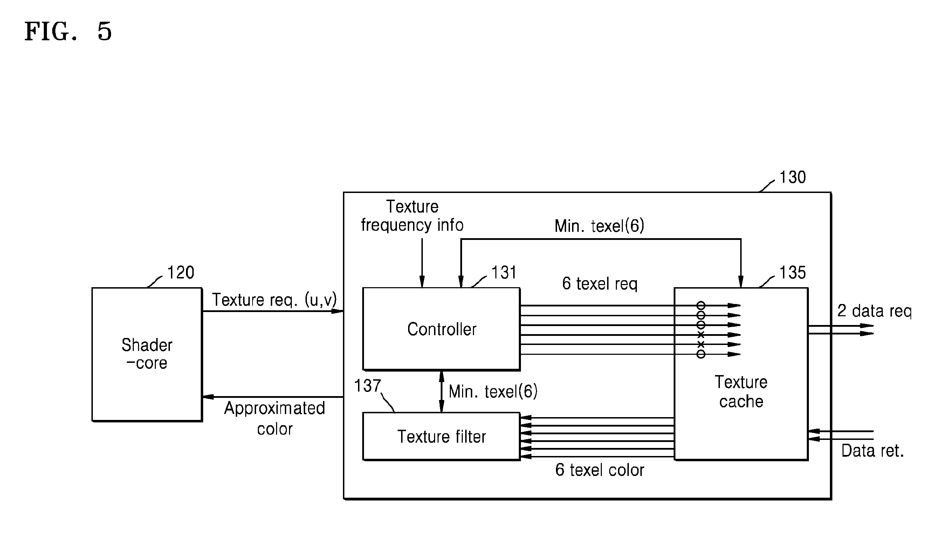

FIG. 5 illustrates another example of an operation of the texture processing unit. For convenience of description, it is premised that a texture filtering method performed by the texture filter 137 is a tri-linear filtering method, but the present embodiment is not limited thereto. The texture processing unit 130 receives from the shader-core 120 a request for texture processing on a pixel to be processed by the shader-core 120 through a texel address corresponding to a pixel address of the pixel to be processed by the shader-core 120.

The control unit 131 of the texture processing unit 130 acquires frequency information of a texture corresponding to the pixel to be processed by the shader-core 120 in order to obtain a pixel value requested by the shader-core 120. At this time, when the acquired frequency information indicates a lower frequency than a predetermined reference value related to a texel value change rate, the control unit 131 determines the minimum number of texels to be used for texture filtering. As shown in FIG. 5, when the determined minimum number of texels is 6, the control unit 131 informs the texture cache 135 that the determined minimum number of texels is 6. In addition, the control unit 131 also transmits information on the determined minimum number of texels to the texture filter 137.

The control unit 131 of the texture processing unit 130 requests the texture cache 135 for eight texel values corresponding to the determined minimum number of texels. As shown in FIG. 5, the control unit 131 request the texture cache 135 for texel values corresponding to six texels included in a partial region of at least one texture/mipmap space, which has been calculated using a texture address received from the shader-core 120.

The texture cache 135 reads texel values corresponding to the number of texels which have been determined by the control unit 131. The texture cache 135 determines a cache hit and/or a cache miss by checking whether each of the texel values requested by the control unit 131 is stored in the texture cache 135 and transmits texel values corresponding to the minimum number of texels, which have been received from the control unit 131, according to a result of comparing the number of cache hits for the requested texel values with the minimum number of texels. If the number of cache hits is less than the minimum number of texels to be used for texture filtering, the texture cache 135 requests the external memory 200 for texel values corresponding to the number of cache misses, compensates for at least one texel value received from the external memory 200 to the cache-hit texel values, and simultaneously transmits texel values corresponding to the minimum number of texels to the texture filter 137.

As shown in FIG. 5, when only four texel values are cache-hit from among the six texel values requested by the control unit 131, the number of cache hits is less than six, which is the minimum number of texels which have been determined by the control unit 131, and thus, the texture cache 135 requests the external memory 200 for two texel values corresponding to the number of cache misses. The texture cache 135 receives two texel values corresponding to the number of cache misses from the external memory 200, compensates for the received two texel values to the cache-hit texel values, and simultaneously transmits six texel values corresponding to the minimum number of texels to the texture filter 137. However, the transmission of the texel values is not limited thereto and the texture cache 135 may sequentially transmit the texel values.

The texture filter 137 generates a pixel value corresponding to the pixel value requested by the shader-core 120 by performing texture filtering using the six texel values received from the texture cache 135 and transmits the generated pixel value to the shader-core 120. Herein, the pixel value transmitted to the shader-core 120 corresponds to an approximated color value but has a very minute error, and thus, the quality of 3D graphics is not significantly influenced.

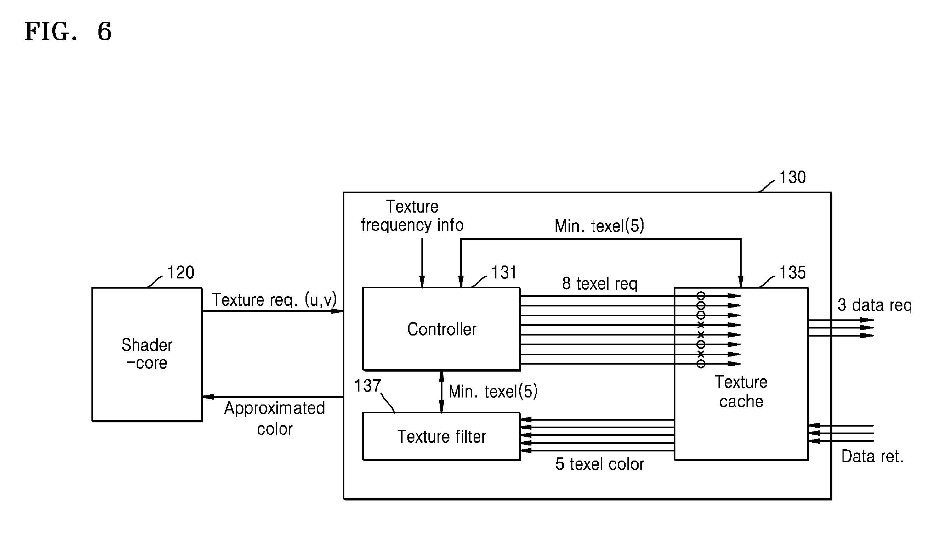

FIG. 6 illustrates another example of an operation of the texture processing unit. For convenience of description, it is premised that a texture filtering method performed by the texture filter 137 is a tri-linear filtering method, but the present embodiment is not limited thereto. The texture processing unit 130 receives from the shader-core 120 a request for texture processing on a pixel to be processed by the shader-core 120 through a texel address corresponding to a pixel address of the pixel to be processed by the shader-core 120.

The control unit 131 of the texture processing unit 130 acquires frequency information of a texture corresponding to the pixel to be processed by the shader-core 120 in order to obtain a pixel value requested by the shader-core 120. At this time, when the acquired frequency information indicates a lower frequency than a predetermined reference value related to a texel value change rate, the control unit 131 determines the minimum number of texels to be used for texture filtering. As shown in FIG. 6, when the determined minimum number of texels is 5, the control unit 131 informs the texture cache 135 that the determined minimum number of texels is 5. In addition, the control unit 131 also transmits information on the determined minimum number of texels to the texture filter 137.

When texture filtering is performed by the texture filter 137 according to the tri-linear filtering method, eight texel values are used to obtain one pixel value, and thus, the control unit 131 of the texture processing unit 130 requests the texture cache 135 for eight texel values. For example, the control unit 131 may request the texture cache 135 for texel values included in a partial region of at least one texture/mipmap space, which has been calculated using a texture address received from the shader-core 120.

The texture cache 135 reads texel values corresponding to the number of texels which have been determined by the control unit 131. The texture cache 135 determines a cache hit and/or a cache miss by checking whether each of the texel values requested by the control unit 131 is stored in the texture cache 135 and transmits texel values corresponding to the minimum number of texels, which have been received from the control unit 131, according to a result of comparing the number of cache hits for the requested texel values with the minimum number of texels. If the number of cache hits is greater than or equal to the minimum number of texels to be used for texture filtering, the texture cache 135 transmits texel values corresponding to the minimum number of texels to the texture filter 137.

After transmitting texel values corresponding to the minimum number of texels to the texture filter 137, the texture cache 135 requests the external memory 200 for at least one texel value corresponding to the number of cache misses and stores at least one texel value received from the external memory 200. Accordingly, the texture cache 135 increases a cache hit probability for a pixel value to be requested by the shader-core 120 thereafter, thereby performing quick graphics processing.

As shown in FIG. 6, when only five texel values are cache-hit from among the eight texel values requested by the control unit 131, the number of cache hits is equal to five, which is the minimum number of texels which have been determined by the control unit 131, and thus, the texture cache 135 transmits five texel values corresponding to the minimum number of texels to the texture filter 137. Thereafter, the texture cache 135 requests the external memory 200 for three texel values corresponding to the number of cache misses and receives and stores three texel values received from the external memory 200. Accordingly, the texture cache 135 increases a cache hit probability for a pixel value to be requested by the shader-core 120 thereafter, thereby performing quick graphics processing.

The texture filter 137 generates a pixel value corresponding to the pixel value requested by the shader-core 120 by performing texture filtering using the five texel values received from the texture cache 135 and transmits the generated pixel value to the shader-core 120. Herein, the pixel value transmitted to the shader-core 120 corresponds to an approximated color value but has a very minute error, and thus, the quality of 3D graphics is not significantly influenced.

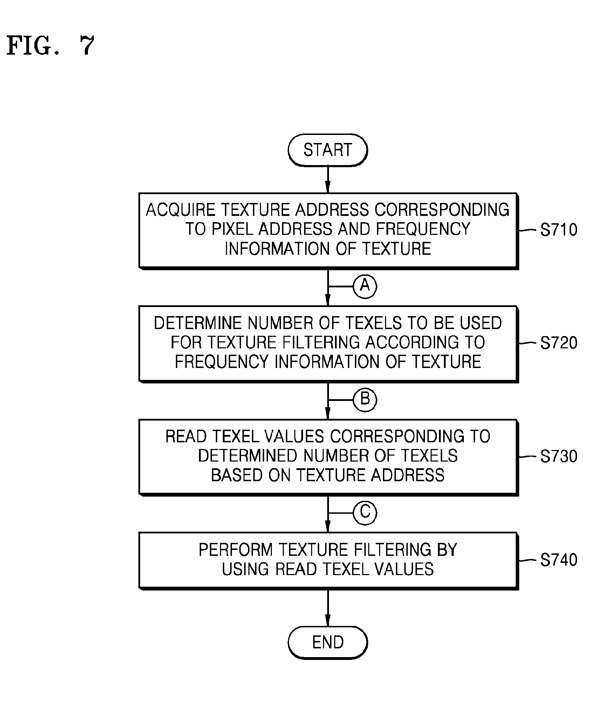

FIG. 7 is a flowchart of an example of a texture processing. The above description of the texture processing unit 130 may also be applied to the texture processing method even though omitted hereinafter.

In operation S710, the texture processing unit 130 acquires a texture address corresponding to a pixel address and frequency information of a texture. In detail, the texture processing unit 130 acquires the texture address corresponding to the pixel address from the shader-core 120. In addition, the texture processing unit 130 may acquire the frequency information of the texture from the decompressor 133, which decompresses a compressed texture received from the external memory 200. The frequency information of the texture may be based on information extracted from a header file of the compressed texture.

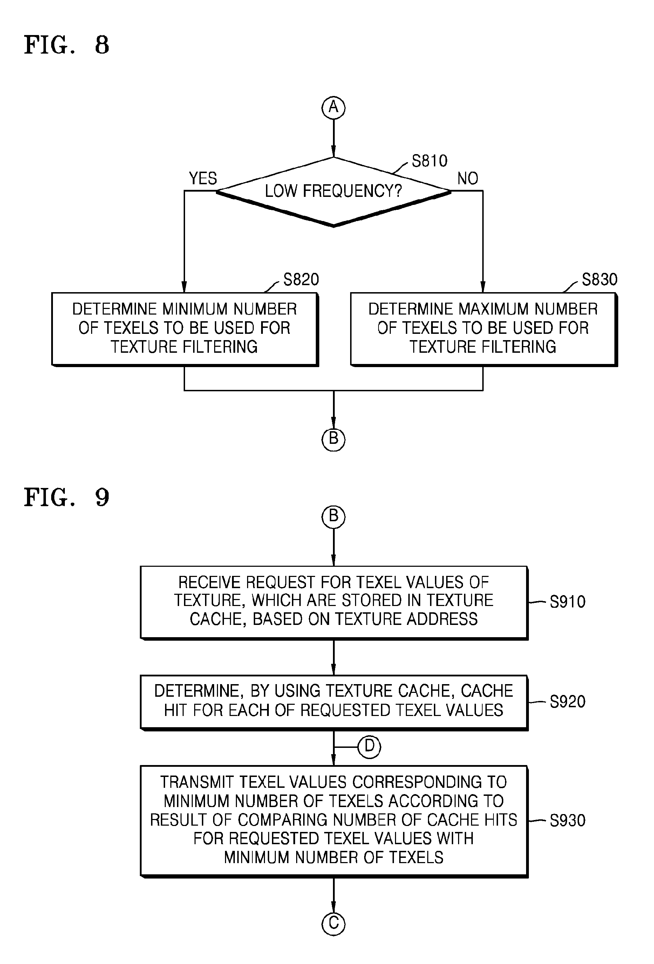

In operation S720, the texture processing unit 130 determines the number of texels to be used for texture filtering according to the frequency information of the texture. In detail, the texture processing unit 130 differently determines the number texels to be used for texture filtering according to whether the texture to be used to calculate a pixel value requested by the shader-core 120 is a low-frequency texture or a high-frequency texture. This will be described below in detail with reference to FIG. 8.

FIG. 8 is a detailed flowchart of an example of an operation of determining the number of texels to be used for texture filtering in the texture processing method.

In operation S810, the texture processing unit 130 determines whether the frequency information of the texture indicates a lower frequency than a predetermined reference value related to a texel value change rate.

If the frequency information of the texture indicates a lower frequency than the predetermined reference value related to the texel value change rate, the texture processing unit 130 determines the minimum number of texels to be used for texture filtering in operation S820.

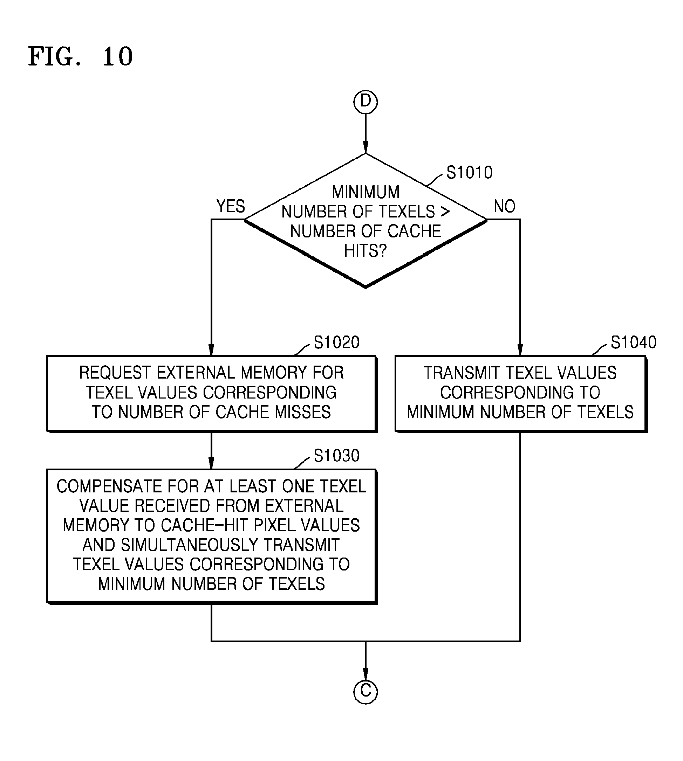

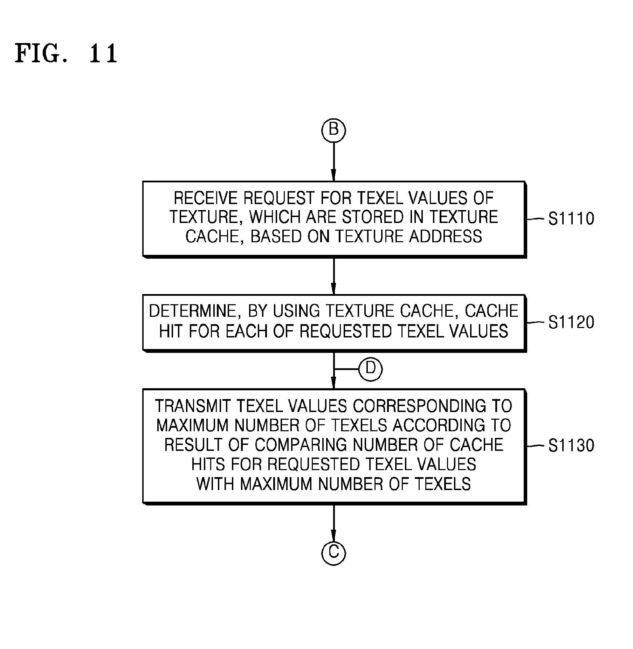

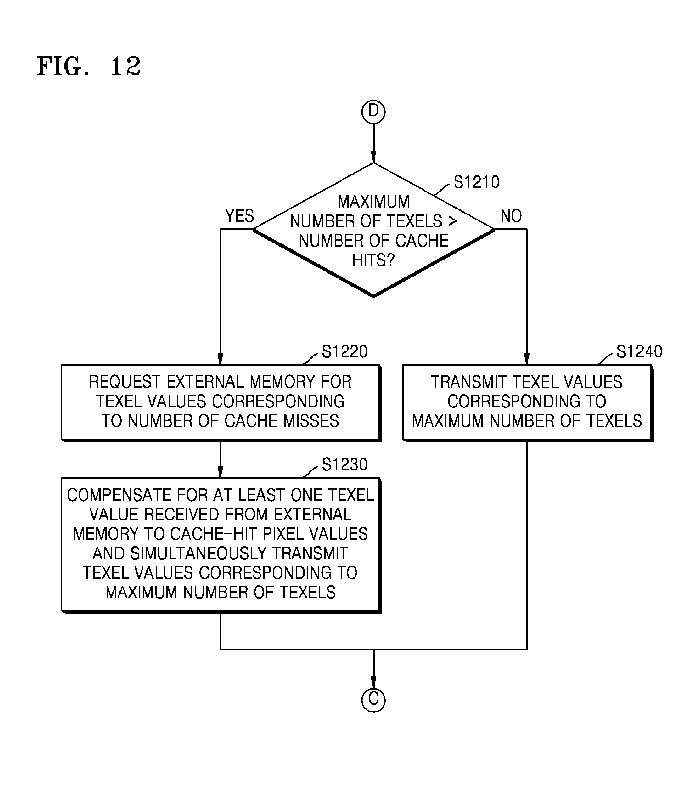

Otherwise, if the frequency information of the texture indicates a higher frequency than the predetermined reference value related to the texel value change rate, the texture processing unit 130 determines the maximum number of texels to be used for texture filtering in operation S830. Referring back to FIG. 7, in operation S730, the texture processing unit 130 reads texel values corresponding to the determined number of texels based on the texture address. This will be described in detail below with reference to FIGS. 9 to 12. When the texture used to calculate the pixel value requested by the shader-core 120 is a low-frequency texture, FIGS. 9 and 10 are referred to, and when the texture used to calculate the pixel value requested by the shader-core 120 is a high-frequency texture, FIGS. 11 and 12 are referred to.

FIG. 9 is a flowchart of an example of an operation of reading texel values corresponding to the number of texels determined for a low-frequency texture in the texture processing method.

In operation S910, the texture cache 135 of the texture processing unit 130 receives a request for texel values of the texture, which are stored in the texture cache 135, based on the texture address. At this time, texel values corresponding to the minimum number of texels to be used for texture filtering, which have been determined in operation S820 of FIG. 8, may be requested for.

In operation S920, the texture cache 135 of the texture processing unit 130 determines a cache hit for each of the requested texel values.

In operation S930, the texture cache 135 of the texture processing unit 130 transmits texel values corresponding to the minimum number of texels according to a result of comparing the number of cache hits for the requested texel values with the minimum number of texels. This will now be described in detail with reference to FIG. 10.

FIG. 10 is a flowchart of an example of an operation of transmitting texel values corresponding to a minimum number of texels according to a result of comparing a number of cache hits with a minimum number of texels.

In operation S1010, the texture cache 135 of the texture processing unit 130 compares the number of cache hits for the requested texel values with the minimum number of texels, which have been determined in operation S820 of FIG. 8.

If the number of cache hits is less than the minimum number of texels to be used for texture filtering, which has been determined in operation S820 of FIG. 8, the texture cache 135 of the texture processing unit 130 requests the external memory 200 for texel values corresponding to the number of cache misses in operation S1020.

In operation S1030, the texture cache 135 of the texture processing unit 130 compensates for at least one texel value received from the external memory 200 to the cache-hit pixel values and simultaneously transmits the texel values corresponding to the minimum number of texels to the texture filter 137. However, it is noted that the transmission of the texel values is not limited thereto and thus the texel values may also be transmitted sequentially.

Otherwise, if the number of cache hits is greater than or equal to the minimum number of texels to be used for texture filtering, which has been determined in operation S820 of FIG. 8, the texture cache 135 of the texture processing unit 130 transmits texel values corresponding to the minimum number of texels to the texture filter 137 in operation S1040. After transmitting the texel values corresponding to the minimum number of texels to the texture filter 137, the texture cache 135 of the texture processing unit 130 may request the external memory 200 for at least one texel value corresponding to the number of cache misses and store at least one texel value received from the external memory 200.

FIG. 11 is a flowchart of an example of an operation of reading texel values corresponding to a number of texels determined for a high-frequency texture in the texture processing method.

In operation S1110, the texture cache 135 of the texture processing unit 130 receives a request for texel values of the texture, which are stored in the texture cache 135, based on the texture address. At this time, texel values corresponding to the maximum number of texels to be used for texture filtering, which has been determined in operation S830 of FIG. 8, may be requested for.

In operation S1120, the texture cache 135 of the texture processing unit 130 determines a cache hit for each of the requested texel values.

In operation S1130, the texture cache 135 of the texture processing unit 130 transmits texel values corresponding to the maximum number of texels according to a result of comparing the number of cache hits for the requested texel values with the maximum number of texels. This will now be described in detail with reference to FIG. 12.

FIG. 12 is a flowchart of an operation of transmitting texel values corresponding to a maximum number of texels according to a result of comparing a number of cache hits with a maximum number of texels.

In operation S1210, the texture cache 135 of the texture processing unit 130 compares the number of cache hits for the requested texel values with the maximum number of texels, which has been determined in operation S830 of FIG. 8.

If the number of cache hits is less than the maximum number of texels to be used for texture filtering, which has been determined in operation S830 of FIG. 8, the texture cache 135 of the texture processing unit 130 requests the external memory 200 for texel values corresponding to the number of cache misses in operation S 1220.

In operation S1230, the texture cache 135 of the texture processing unit 130 compensates for at least one texel value received from the external memory 200 to the cache-hit pixel values and simultaneously transmits the texel values corresponding to the maximum number of texels to the texture filter 137. However, it is noted that the transmission of the texel values to the texture filter 137 is not limited thereto and thus the texel values may also be transmitted sequentially to the texture filter 137.

Otherwise, if the number of cache hits is equal to the maximum number of texels to be used for texture filtering, which has been determined in operation S830 of FIG. 8, the texture cache 135 of the texture processing unit 130 transmits texel values corresponding to the maximum number of texels to the texture filter 137 in operation S1240.

Referring back to FIG. 7, in operation S740, the texture processing unit 130 performs texture filtering by using the read texel values. A pixel value generated using the texture filtering may be transmitted to the shader-core 120.

As described above, according to the one or more of the above embodiments, a time taken to process graphics may be reduced by reducing a time taken to process a texture.

In addition, other embodiments can also be implemented through computer-readable code/instructions in/on a non-transitory medium, e.g., a non-transitory computer-readable recording medium, to control at least one processing element to implement any above-described embodiment. The non-transitory medium can correspond to any non-transitory medium/media permitting the storage and/or transmission of the computer-readable code.

The computer-readable code can be recorded/transferred on a non-transitory medium in a variety of ways, with examples of the medium including recording media, such as magnetic storage media (e.g., ROM, floppy disks, hard disks, etc.) and optical recording media (e.g., CD-ROMs, or DVDs), and transmission media such as Internet transmission media. Thus, the non-transitory medium may be such a defined and measurable structure including or carrying a signal or information, such as a device carrying a bitstream according to one or more exemplary embodiments. The media may also be a distributed network, so that the computer-readable code is stored/transferred and executed in a distributed fashion. Furthermore, the processing element could include a processor or a computer processor, and processing elements may be distributed and/or included in a single device.

It should be understood that the embodiments described therein should be considered in a descriptive sense only and not for purposes of limitation. Descriptions of features or aspects within each embodiment should typically be considered as available for other similar features or aspects in other exemplary embodiments.

While this disclosure includes specific examples, it will be apparent to one of ordinary skill in the art that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A method of processing a texture, the method comprising:
acquiring a texture address corresponding to a pixel address and frequency information of the texture;
determining a number of texels to be used for texture filtering according to the frequency information of the texture;
reading texel values corresponding to the determined number of texels based on the texture address; and
performing the texture filtering by using the read texel values.

2. The method of claim 1, wherein the determining of the number of texels comprises either determining a minimum number of texels to be used for the texture filtering in response to the frequency information of the texture indicating a lower frequency than a reference value related to a texel value change rate, or
determining a maximum number of texels to be used for the texture filtering in response to the frequency information of the texture indicating a higher frequency than a reference value related to a texel value change rate.

3. The method of claim 2, wherein the reading of the texel values comprises:
receiving a request for texel values of a texture stored in a texture cache on the basis of the texture address;
determining a number of cache hits for the requested texel values in the texture cache;
and
transmitting texel values corresponding to the minimum number of texels according to a result of comparing the number of cache hits for the requested texel values with the minimum number of texels.

4. The method of claim 3, wherein the receiving of the request for texel values of the texture stored in the texture cache comprises receiving a request for texel values corresponding to the minimum number of texels.

5. The method of claim 3 or 4, wherein the transmitting of the texel values comprises:
requesting an external memory for texel values corresponding to a number of cache misses when the number of cache hits is less than the minimum number of texels to be used for the texture filtering; and
compensating for at least one texel value received from the external memory to a cache-hit texel values and simultaneously transmitting the texel values corresponding to the minimum number of texels.

6. The method of any of claims 3 to 5, wherein the transmitting of the texel values comprises transmitting the texel values corresponding to the minimum number of texels in response to the number of cache hits being greater than or equal to the minimum number of texels to be used for the texture filtering, and optionally wherein the reading of the texel values comprises:
requesting an external memory for at least one texel value corresponding to a number of cache misses after transmitting the texel values corresponding to the minimum number of texels; and
storing the at least one texel value received from the external memory in the texture cache.

7. The method of any preceding claim, wherein the frequency information of the texture is based on information extracted from a header file of a compressed texture.

8. A non-transitory computer-readable recording medium having recorded thereon a computer-readable program for performing the method of any preceding claim.

9. An apparatus for processing a texture, the apparatus comprising:
a control unit configured to acquire a texture address corresponding to a pixel address and frequency information of the texture and to determine the number of texels to be used for texture filtering according to the frequency information of the texture;
a texture cache configured to read texel values corresponding to the determined number of texels based on the texture address; and
a texture filter configured to perform the texture filtering by using the read texel values.

10. The apparatus of claim 9, wherein the control unit is further configured to either determine a minimum number of texels to be used for the texture filtering in response to the frequency information of the texture indicating a lower frequency than a reference value related to a texel value change rate, or
to determine a maximum number of texels to be used for the texture filtering in response to the frequency information of the texture indicating a higher frequency than a reference value related to a texel value change rate .

11. The apparatus of claim 10, wherein the texture cache is further configured to receive a request for texel values of a texture stored in the texture cache on the basis of the texture address, to determine a number of cache hits for the requested texel values, and to transmit texel values corresponding to the minimum number of texels according to a result of comparing the number of cache hits for the requested texel values with the minimum number of texels.

12. The apparatus of claim 11, wherein the texture cache receives the request for texel values corresponding to the minimum number of texels.

13. The apparatus of claim 11 or 12, wherein the texture cache is further configured to request an external memory for texel values corresponding to a number of cache misses when the number of cache hits is less than the minimum number of texels to be used for the texture filtering, to compensate for at least one texel value received from the external memory to a cache-hit texel values, and to simultaneously transmit texel values corresponding to the minimum number of texels.

14. The apparatus of any of claims 11 to 13, wherein the texture cache is further configured to transmit the texel values corresponding to the minimum number of texels in response to the number of cache hits being greater than or equal to the minimum number of texels to be used for the texture filtering, and optionally wherein the texture cache is further configured to request an external memory for at least one texel value corresponding to a number of cache misses after transmitting the texel values corresponding to the minimum number of texels and to store the at least one texel value received from the external memory.

15. The apparatus of any of claims 9 to 14, further comprising a decompressor configured to decompress a compressed texture received from an external memory,
wherein the control unit acquires the frequency information of the texture, which is determined based on information extracted from a header file of the compressed texture, from the decompressor.
